# FASCICULE DE BREVET EUROPEEN

(11) **EP 2 917 868 B1**
(45) Date de publication et mention de la délivrance du brevet: **13.05.2020**
(21) Numéro de dépôt: 13792321.5
(22) Date de dépôt: 12.11.2013
(51) Int. Cl.: G06F 21/32

(54) **PROCEDE D'IDENTIFICATION**
METHODE ZUR IDENTIFIKATION
METHOD OF IDENTIFICATION

(30) Priorité: 12.11.2012 FR 1260753
(43) Date de publication de la demande: 16.09.2015
(73) Titulaire: Idemia Identity & Security France, 92400 Courbevoie (FR)
(72) Inventeur: THUILLIER, Cédric, F-92400 COURBEVOIE (FR); BAYON DE NOYER, Jérôme, F-92400 COURBEVOIE (FR)
(74) Mandataire: Lavialle, Bruno François Stéphane
(86) Numéro de dépôt international: PCT/EP2013/073655
(87) Numéro de publication internationale: WO 2014/072535

(56) Documents cités:
- EP-A2- 1 965 331
- US-A1- 2006 171 571
- JAIN A K ET AL: "Learning user-specific parameters in a multibiometric system", INTERNATIONAL CONFERENCE ON IMAGE PROCESSING (ICIP), IEEE, vol. 1, 22 septembre 2002 (2002-09-22), pages 57-60, XP010607259, DOI: 10.1109/ICIP.2002.1037958 ISBN: 978-0-7803-7622-9
- Karine Pellerin: "Increasing Accuracy in Multimodal Biometric Systems", Global Infomration Assurace Certification Paper, 8 octobre 2004 (2004-10-08), pages 1-22, XP055074936, Extrait de l'Internet: URL:http://www.giac.org/paper/gsec/4110/in creasing-accuracy-multimodal-biometric-sys tems/106587 [extrait le 2013-08-13]
- ROSS A ET AL: "Multimodal Biometrics: An Overview", PROC. OF 12TH EUROPEAN SIGNAL PROCESSING CONFERENCE (EUSIPCO), VIENNA, AUSTRIA , 30 septembre 2004 (2004-09-30), pages 1221-1224, XP002560442, Extrait de l'Internet: URL:http://www.csee.wvu.edu/~ross/pubs/Ros sMultimodalOverview_EUSIPCO04.pdf [extrait le 2009-12-14]

## Description

L'invention concerne un procédé d'identification automatisée d'un individu sujet par au moins une comparaison de données biométriques de l'individu sujet avec des données biométriques d'individus de référence préenregistrées dans une base de données.

### ARRIERE PLAN DE L'INVENTION

L'identification biométrique consiste à identifier un individu à partir de certaines de ses caractéristiques physiques ou comportementales. Parmi les technologies fréquemment utilisées pour la reconnaissance de caractéristiques physiques, on trouve des systèmes basés sur la reconnaissance de l'ADN, de la forme du visage, de l'iris ou de la rétine de l'œil, de la paume, des empreintes digitales, etc. Les technologies généralement utilisées pour la reconnaissance de caractéristiques comportementales comprennent des systèmes basés sur l'analyse de la voix, de l'écriture, de la marche, etc.

Pour identifier un individu sujet parmi un ensemble d'individus de référence enregistrés dans une base de données d'un système informatique, on réalise tout d'abord des mesures permettant d'obtenir des données biométriques définissant les caractéristiques physiques ou comportementales de l'individu sujet. Puis, un algorithme exécuté par une unité de traitement du système informatique compare ces données biométriques avec des données biométriques équivalentes des individus de référence provenant de la base de données. L'individu sujet est alors identifié, à condition bien sûr que celui-ci ait été préalablement référencé dans la base de données.

Il est bien sûr préférable que l'identification soit réalisée le plus rapidement possible, c'est-à-dire en exploitant au mieux les ressources matérielles et logicielles permettant de rechercher un individu sujet dans la base de données, tout en fournissant des résultats fiables. La fiabilité des résultats d'une méthode d'identification biométrique est évaluée grâce à la mesure d'indicateurs tels le Taux de Fausse Acceptation, indiquant la probabilité qu'un individu sujet n'ayant pas été référencé soit identifié comme étant un des individus de référence, ou le Taux de Faux Rejet, indiquant la probabilité qu'un individu de référence ne soit pas identifié au moment de la tentative d'identification de l'individu sujet.

Pour améliorer la fiabilité de l'identification, il est recommandé de réaliser celle-ci en effectuant des comparaisons de plusieurs types de données biométriques. Ceci conduit donc à exécuter plusieurs algorithmes, simultanément ou à la suite, ce qui, à ressources matérielles et logicielles équivalentes, augmente de manière importante la durée nécessaire à l'identification.

Le document EP-A2-1965331 décrit ainsi l'utilisation successive de deux algorithmes. Le document US2006/0171571 divulgue une méthode d'authentification combinant plusieurs modalités biométriques par une fusion de données et évaluant un échantillon biométrique d'une modalité en utilisant plusieurs algorithmes. Cette méthode incorpore des métriques de qualités associées aux échantillons afin d'ajuster les paramètres de fusion.

### OBJET DE L'INVENTION

L'invention a pour objet un procédé d'identification permettant de réaliser une identification fiable tout en optimisant la durée nécessaire à cette identification.

L'invention est définie par la revendication indépendante 1, les revendications dépendantes proposant des modes de réalisation particuliers.

### RESUME DE L'INVENTION

En vue de la réalisation de ce but, on propose un procédé d'identification d'un individu sujet par au moins une comparaison de données biométriques de l'individu sujet avec des données biométriques d'individus de référence préenregistrées dans une base de données. Selon l'invention, la comparaison des données biométriques de l'individu sujet et de chaque individu de référence est réalisée au moyen d'un premier algorithme ou d'un deuxième algorithme ayant des performances différentes et l'algorithme de comparaison est sélectionné, pour chaque individu de référence, selon au moins un critère de sélection propre à chaque individu de référence.

Le procédé de l'invention permet donc, par exemple, d'exécuter un algorithme de comparaison très fiable mais relativement lent, ou bien un algorithme plus rapide mais moins fiable. La sélection de l'algorithme de comparaison est réalisée selon un critère relatif à la qualité des données biométriques de chaque individu de référence, ce qui permet d'accélérer l'identification en appliquant un algorithme rapide pour comparer des données biométriques d'un certain type lorsque la comparaison de données biométriques d'un autre type est réputée fournir des résultats satisfaisants. La sélection de l'algorithme de comparaison peut aussi être réalisée selon des critères supplémentaires, et notamment des critères non relatifs aux données biométriques des individus de référence, dans l'objectif de diminuer au maximum la durée de l'indentification lorsque cela est possible, ou bien de garantir une identification très fiable lorsque cela est nécessaire.

L'invention sera mieux comprise à la lumière de la description qui suit d'un mode de mise en œuvre particulier non limitatif de l'invention.

### BREVE DESCRIPTION DES DESSINS

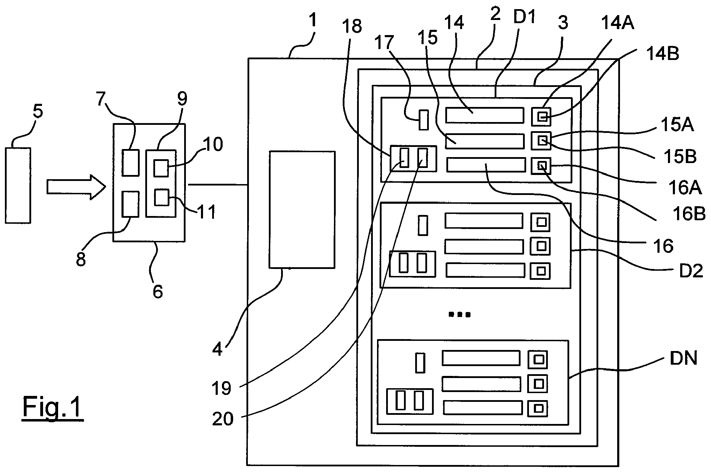

Il sera fait référence au dessin annexé de la figure 1, qui représente schématiquement la manière dont est mis en œuvre le procédé de l'invention selon un mode de réalisation particulier.

### DESCRIPTION DETAILLEE DE L'INVENTION

Le procédé de l'invention est ici mis en œuvre dans une application d'identification biométrique dont le but est de reconnaître un sujet, au cours d'un contrôle d'indentification, parmi une population de référence relativement importante d'individus référencés dans une base de données.

Un tel contrôle d'identification peut avoir lieu par exemple à l'entrée d'une enceinte accueillant une manifestation publique importante, à l'entrée d'un bureau de vote, d'un bâtiment officiel, dans le cadre d'une enquête de police, etc.

La reconnaissance du sujet est ici basée sur la comparaison, chez le sujet contrôlé et les individus de référence, de données biométriques relatives à deux caractéristiques physiques : l'empreinte digitale d'un doigt et l'iris d'un œil.

Des données biométriques des individus de référence de la base de données ont été enrôlées préalablement au contrôle d'identification, c'est-à-dire qu'elles ont été relevées par mesure sur les individus de référence, associées à un identifiant individuel permettant d'identifier chaque individu de référence, et enregistrées dans la base de données.

En référence à la figure 1, le contrôle d'identification nécessite un organe d'identification 1, à savoir un système informatique, comprenant des moyens de stockage 2 dans lesquels est stockée la base de données 3, et des moyens de traitement et de contrôle 4 pour gérer la base de données 3 et pour réaliser les comparaisons entre les données biométriques du sujet contrôlé 5 et de chaque individu de référence.

L'organe d'identification 1 est relié à des moyens d'acquisition 6 permettant d'obtenir les données biométriques du sujet relatives à l'empreinte digitale et à l'iris de l'œil. Les moyens d'acquisition 6 comprennent des moyens de capture d'une image de l'empreinte digitale 7, par exemple un capteur à technologie capacitive pour détecter les motifs de la peau, et des moyens de capture d'une image de l'iris 8, par exemple une caméra de type CCD (Charge-Coupled Device ou dispositif à transfert de charge), ainsi que des moyens de mise en forme 9 qui comprennent notamment des moyens de conversion analogique-numérique 10 et des moyens traitement numérique 11. Les moyens de conversion analogique-numérique 10 sont agencés pour transformer les données analogiques fournies par les moyens de capture 7, 8 en signaux numériques. Les moyens de traitement numérique 11 sont agencés pour obtenir, à partir de ces signaux numériques, des données biométriques du sujet contrôlé 5 relatives à l'empreinte digitale et à l'iris, et adaptées à être comparées avec les données biométriques des individus de référence.

Dans la base de données sont stockées des données référencées D1, D2, ..., DN d'un nombre N d'individus de référence. Pour chaque individu de référence, les données référencées contiennent :
- des données biométriques 14 relatives à au moins une empreinte digitale,
- des données biométriques 15 relatives à l'iris d'au moins un œil,
- des données biométriques d'un autre type 16, c'est-à-dire relatives à une autre caractéristique physique ou comportementale, non utilisées ici mais pouvant l'être dans une autre application,
- des données d'optimisation 14A, 15A, 16A, associées à chaque type de données biométriques, dont l'intérêt sera évoqué plus loin,
- des données d'identification 17 permettant d'identifier l'individu de référence,
- des données indépendantes 18, propres à un individu de référence, dont le rôle sera lui aussi expliqué plus loin.

Au cours du contrôle d'identification, les données biométriques du sujet contrôlé 5 et celles de chacun des individus de référence sont comparées par les moyens de contrôle 4. Les moyens de contrôle 4 identifient alors l'individu de référence, s'il en existe un, dont les caractéristiques physiques étudiées sont les plus proches de celles du sujet contrôlé 5.

Le procédé de l'invention prévoit de réaliser, pour chaque contrôle, une double reconnaissance basée sur les deux caractéristiques physiques (empreinte digitale et iris). Cette double reconnaissance permet d'augmenter la fiabilité du contrôle. Pour chacune des ces caractéristiques physiques, au moins deux algorithmes, permettant d'effectuer la comparaison entre le sujet contrôlé 5 et chaque individu de référence, sont implémentés dans les moyens de contrôle 4 : un premier algorithme et un deuxième algorithme, dont l'exécution est plus lente que celle du premier algorithme, mais dont les résultats sont plus fiables. Ici, par « plus fiables », on entend que des taux d'erreurs de type Taux de Fausse Acceptation ou Taux de Faux Rejet sont plus faibles.

Le procédé de l'invention prévoit de sélectionner le premier algorithme ou le second algorithme, de manière à optimiser la rapidité du contrôle d'identification et la fiabilité de ce contrôle.

Cette sélection entre le premier et le second algorithme est réalisée selon le premier critère décrit ci-dessous (niveau de qualité), ou bien selon ce premier critère et un ou plusieurs critères supplémentaires pris en compte simultanément, qui sont mis à la disposition d'un utilisateur en charge de réaliser le contrôle d'identification, ou bien qui ont été préalablement définis, par programmation par exemple, dans l'organe d'identification 1.

Le premier critère, associé à chaque individu de référence, est un niveau de qualité 14B, 15B, 15B des données biométriques 14, 15, 16 relatives à une caractéristique, qui permet d'évaluer la singularité de l'individu de référence quant à cette caractéristique par rapport au reste de la base de données 3. Ce niveau de qualité peut consister en une valeur comprise entre zéro et cent. Ainsi, un motif d'une empreinte digitale particulièrement rare conférera à l'individu de référence une valeur élevée proche de cent. Ce niveau de qualité 14B, 15B, 16B, associé aux données biométriques 14, 15, 16 de chaque caractéristique chez chaque individu de référence, est stocké dans les données d'optimisation 14A, 15A, 16A.

Dans le cas où un tel critère est utilisé, le procédé de l'invention consiste, pour sélectionner un algorithme de comparaison pour comparer les données biométriques relatives à l'empreinte digitale, à comparer avec un seuil prédéfini la valeur du niveau de qualité 15B associé aux données biométriques 15 relatives à l'iris. Si, par exemple, le seuil est égal à cinquante, et que la note chiffrée de l'iris chez un individu de référence particulier est égale à soixante-dix, ce qui indique que le niveau de qualité des données de l'iris est relativement haut, le premier algorithme, plus rapide mais moins fiable, sera choisi. En effet, il est probable que, si l'individu de référence particulier et le sujet 5 sont une seule et même personne, le sujet 5 sera identifié grâce à l'iris. Inversement, si la valeur associée à l'iris de l'individu particulier de référence était faible, le second algorithme, plus lent mais plus fiable, serait sélectionné.

Avantageusement, on prévoit que les moyens de contrôle 4 puissent modifier dynamiquement le seuil prédéterminé et/ou la valeur du niveau de qualité propre d'un individu de référence pour une caractéristique particulière. Il peut par exemple être intéressant de diminuer la valeur du seuil si les données biométriques sont considérées de mauvaise qualité chez un nombre trop important d'individus. Il est aussi possible que l'introduction de nouveaux individus de référence dans la base de données 3 rende nécessaire de diminuer la valeur du niveau de qualité de certains des individus référencés préalablement à cette introduction.

Le deuxième critère est un critère indépendant des données biométriques 14, 15, 16, qui permet, pour certains individus de référence particuliers présentant une information de particularité 19 rendant nécessaire une identification la plus fiable possible, de ne prévoir de n'utiliser que le second algorithme quelle que soit la qualité de ses données biométriques. Ce critère permet par exemple de distinguer des individus de référence particulièrement dangereux, pour lesquels une identification fiable est cruciale et rend acceptable une durée d'identification plus importante. L'information de particularité 19 est stockée dans les données indépendantes 18.

Le troisième critère permet d'évaluer la distance géographique entre les endroits où ont été enrôlées les données biométriques 14, 15, 16 d'un individu de référence particulier et celles du sujet 5. En effet, la probabilité que le sujet 5 et l'individu de référence particulier soient une même personne est nettement plus importante si leurs données ont été enrôlées à des endroits proches. Le premier algorithme est alors suffisant pour assurer une reconnaissance fiable. L'information du lieu d'enrôlement 20 est elle aussi stockée dans les données indépendantes 18.

L'invention n'est pas limitée au mode de mise en œuvre particulier qui vient d'être décrit, mais, bien au contraire, couvre toute variante entrant dans le cadre de l'invention telle que définie par les revendications.

Bien que l'on ait choisi, pour illustrer l'invention, d'utiliser dans cette description la fiabilité et la rapidité d'exécution pour définir la performance d'un algorithme, il est bien sûr possible de mettre en œuvre le procédé de l'invention en tenant compte de propriétés d'algorithmes différentes (utilisation de ressources mémoire, etc.).

Bien que l'on ait prévu d'identifier un sujet sur la base d'un certain nombre de caractéristiques physiques particulières, il est possible d'utiliser un nombre différent de caractéristiques différentes.

## Revendications

1. Procédé d'identification d'un individu sujet (5) par au moins une comparaison de données biométriques de l'individu sujet avec des données biométriques (14, 15, 16) d'au moins une caractéristique physique d'individus de référence préenregistrées dans une base de données (3), **caractérisé en ce que** la comparaison des données biométriques de l'individu sujet (5) et de chaque individu de référence est réalisée, pour chaque caractéristique physique, au moyen d'un premier algorithme ou d'un deuxième algorithme ayant des performances différentes, le premier algorithme étant plus rapide mais moins fiable que le deuxième algorithme, et **en ce que** l'algorithme de comparaison est sélectionné, pour chaque individu de référence, selon au moins un critère de sélection propre à chaque individu de référence, le critère de sélection correspondant à un niveau de qualité affecté aux données biométriques de chaque individu de référence, le niveau de qualité étant comparé avec un seuil prédéterminé, le premier algorithme ou le deuxième algorithme étant sélectionné à partir du résultat de la comparaison.

2. Procédé selon la revendication 1, dans lequel deux comparaisons de données biométriques sont effectuées sur des données biométriques de types différents.

3. Procédé selon la revendication 1, dans lequel l'un ou l'autre algorithme est en outre sélectionné pour comparer des données biométriques d'un certain type, en fonction de la comparaison avec un seuil d'un niveau de qualité (14B, 15B, 16B) affecté à des données biométriques d'un autre type.

4. Procédé selon la revendication 1, dans lequel le niveau de qualité (14B, 15B, 16B) affecté à au moins une des données biométriques d'un des individus de référence et/ou le seuil prédéterminé peuvent être modifiés dynamiquement.

5. Procédé selon la revendication 1, dans lequel, pour chaque individu de référence, le critère de sélection dépend en outre de l'individu de référence et de l'individu sujet (5).

6. Procédé selon la revendication 5, dans lequel, pour chaque individu de référence, le critère de sélection dépend en outre de l'éloignement géographique entre les endroits où ont été enrôlées les données biométriques de l'individu sujet (5) et les données biométriques (14, 15, 16) de l'individu de référence.

## Patentansprüche

1. Verfahren zur Identifikation einer Einzelperson (5) durch mindestens einen Vergleich biometrischer Daten der Einzelperson mit zuvor in einer Datenbank (3) gespeicherten biometrischen Daten (14, 15, 16) mindestens eines physischen Merkmals von Referenzpersonen, **dadurch gekennzeichnet, dass** der Vergleich der biometrischen Daten der Einzelperson (5) und jeder Referenzperson für jedes physische Merkmal mittels eines ersten Algorithmus oder eines zweiten Algorithmus, der andere Leistungen hat, durchgeführt wird, wobei der erste Algorithmus schneller aber weniger zuverlässig als der zweite Algorithmus ist, und dass der Vergleichsalgorithmus für jede Referenzperson gemäß mindestens einem Auswahlkriterium ausgewählt wird, das für jede Referenzperson spezifisch ist, wobei das Auswahlkriterium einem Qualitätsniveau entspricht, das den biometrischen Daten jeder Referenzperson zugewiesen ist, wobei das Qualitätsniveau mit einem vorgegebenen Schwellenwert verglichen wird, wobei der erste Algorithmus oder der zweite Algorithmus anhand des Ergebnisses des Vergleichs ausgewählt wird.

2. Verfahren nach Anspruch 1, bei dem zwei Vergleiche biometrischer Daten an biometrischen Daten unterschiedlicher Arten durchgeführt werden.

3. Verfahren nach Anspruch 1, bei dem der eine oder der andere Algorithmus ferner ausgewählt wird, um biometrische Daten einer bestimmten Art in Abhängigkeit des Vergleichs mit einem Schwellenwert eines Qualitätsniveaus (14B, 15B, 16B) zu vergleichen, das biometrischen Daten einer anderen Art zugewiesen ist.

4. Verfahren nach Anspruch 1, bei dem das Qualitätsniveau (14B, 15B, 16B), das mindestens einem Datenelement der biometrischen Daten einer der Referenzpersonen zugewiesen ist, und/oder der vorbestimmte Schwellenwert dynamisch modifiziert werden können.

5. Verfahren nach Anspruch 1, bei dem für jede Referenzperson das Auswahlkriterium ferner von der Referenzperson und der Einzelperson (5) abhängt.

6. Verfahren nach Anspruch 5, bei dem für jede Referenzperson das Auswahlkriterium ferner von der geographischen Entfernung zwischen den Orten abhängt, an denen die biometrischen Daten der Einzelperson (5) und die biometrischen Daten (14, 15, 16) der Referenzperson aufgezeichnet wurden.

## Claims

1. A method of identifying a subject person (5) by comparing at least biometric data of the subject person with biometric data (14, 15, 16) of at least one physical characteristic of reference people previously recorded in a database (3), the method being **characterized in that** the comparison of the biometric data of the subject person (5) with the data of each reference person is performed, for each physical characteristic, by means of a first algorithm or of a second algorithm presenting different performance ratings, the first algorithm being faster but less reliable than the second algorithm, and **in that**, for each reference person, the comparison algorithm is selected on the basis of at least one selection criterion specific to each reference person, the selection criterion corresponding to a quality level associated with the biometric data of each reference person, the quality level being compared with a predetermined threshold, the first algorithm or the second algorithm being selected from the result of the comparison.

2. A method according to claim 1, wherein two biometric data comparisons are performed on biometric data of different types.

3. A method according to claim 1, wherein one or the other algorithm is furthermore selected for comparing biometric data of a certain type as a function of the comparison with a quality level threshold (14B, 15B, 16B) allocated to biometric data of another type.

4. A method according to claim 1, wherein the quality level (14B, 15B, 16B) allocated to at least one type of biometric data of one of the reference people and/or the predetermined threshold can be modified dynamically.

5. A method according to claim 1, wherein, for each reference person, the selection criterion depends furthermore on the reference person and on the subject person (5).

6. A method according to claim 5, wherein, for each reference person, the selection criterion depends furthermore on the geographical distance between the enrollment locations for the biometric data of the subject person (5) and for the biometric data (14, 15, 16) of the reference person.
